# EUROPÄISCHE PATENTSCHRIFT

(11) **EP 4 049 825 B1**
(45) Veröffentlichungstag und Bekanntmachung des Hinweises auf die Patenterteilung: **25.12.2024**
(21) Anmeldenummer: 22157475.9
(22) Anmeldetag: 18.02.2022
(51) Int. Cl.: B29C 45/73

(54) **VORRICHTUNG UND VERFAHREN ZUR GEREGELTEN DURCHFLUSSTEMPERIERUNG EINER SPRITZGIESSFORM**
DEVICE AND METHOD FOR REGULATED TEMPERATURE CONTROL OF AN INJECTION MOULD
DISPOSITIF ET PROCÉDÉ DE RÉGULATION DE LA TEMPÉRATURE DE L'ÉCOULEMENT D'UN MOULE DE MOULAGE PAR INJECTION

(30) Priorität: 24.02.2021 DE 102021104375
(43) Veröffentlichungstag der Anmeldung: 31.08.2022
(73) Patentinhaber: Arburg GmbH + Co KG, 72290 Loßburg (DE)
(72) Erfinder: Duffner, Eberhard, 72181 Starzach (DE); Faßbender, Eckart, 72290 Loßburg (DE)
(74) Vertreter: RPK Patenanwälte Reinhardt und Kaufmann Partnerschaft mbB (Pforzheim)

(56) Entgegenhaltungen:
- EP-A1- 2 762 290
- DE-B3- 102005 019 890
- US-A1- 2017 153 074

## Beschreibung

Die Erfindung betrifft eine Spritzgießmaschine zur Verarbeitung von Kunststoffen und anderer plastifizierbarer Massen, wie metallischen, keramischen und/oder pulverförmigen Massen, mit einer Vorrichtung zur sowie ein Verfahren zur geregelten Durchflusstemperierung einer Spritzgießform an einer derartigen Spritzgießmaschine nach dem Oberbegriff der Ansprüche 1 bzw. 5.

Beim Betrieb einer Spritzgießmaschine, insbesondere einer Kunststoffspritzgießmaschine zur Verarbeitung von Kunststoffen und anderer plastifizierbarer Massen, wird die zu verarbeitende Masse in einer Spritzgießeinheit aufgeschmolzen und homogenisiert und anschließend in eine Spritzgießform eingespritzt. Nach dem Einspritzen wird die Spritzgießform abgekühlt, um das Spritzgießteil abzukühlen und nach seinem Aushärten auszuwerfen, bevor der nächste Spritzzyklus beginnt. Bei diesem Vorgang des Einspritzens von plastifiziertem Material und anschließendem Abkühlen ist die Temperaturführung der Spritzgießform von entscheidender Bedeutung für die Qualität des damit hergestellten Spritzgießteils. So ist es insbesondere bereits seit langem bekannt, die Spritzgießform über Temperatursensoren zu überwachen und die der Spritzgießform zugeführte Menge an Temperiermedium Druck- und Temperaturabhängig zu regeln.

In der DE 10 2005 019 890 B3 sind eine Vorrichtung zur Temperierung des Formwerkzeuges einer Kunststoffverarbeitungsmaschine sowie ein Verfahren mit einer entsprechenden Vorrichtung offenbart. Dabei sind in dem Formwerkzeug Temperiermedienkanäle für zumindest ein Temperiermedium vorgesehen, wobei jeder Temperiermedienkanal einer Zone des Formwerkzeuges zugeordnet ist, so dass die Temperatur einer Zone unabhängig von der Temperatur einer anderen Zone geregelt werden kann. Jeder Temperiermedienkanal weist eine Temperiermedien-Zuleitung und eine Temperiermedien-Ableitung auf. Jeder Zone des Formwerkzeuges ist ein Temperaturfühler zur Bestimmung der Ist-Temperatur der Zone zugeordnet. Zumindest ein Temperaturfühler ist zur Bestimmung der Temperatur des Temperiermediums vor dem Eintritt in das Formwerkzeug vorgesehen und jeder Zone ist ein Mittel zur Bestimmung des Durchflusses an Temperiermedium zugeordnet, das durch den Temperiermedienkanal fließt. Vorzugsweise weist jeder Vorlauf eines Temperiermedienkanals ein Ventil und jeder Rücklauf eines Temperiermedienkanals ein weiteres Ventil auf. Ein Steuerteil regelt eine Fördermenge des Temperiermediums in dem jeweiligen Temperiermedienkanal.

Aus der EP 2 602 085 B1 ist eine Durchflusstemperierung einer Spritzgießform bekannt, mit der eine zuverlässige und kostengünstige Überwachung und Steuerung mehrerer Kühlkreisläufe einer Spritzgießform ermöglicht wird. Die Kühlkreisläufe weisen dazu jeweils ein Proportionalmengenventil sowie im Rücklauf einen Durchflussmengensensor und einen Temperatursensor auf, um die einzelnen Kühlkreisläufe entsprechend den jeweiligen Prozessanforderungen nachzuregeln.

In der WO 2012/035 052 A1 ist ein Verfahren zur Herstellung eines Kunststoff-Formteils offenbart, wobei ein Kunststoff-Material aufgeschmolzen und in eine Form eingespritzt wird, wobei mittels eines Temperiermediums das Kunststoff-Formteil in der Form abgekühlt wird, und wobei das fertige Kunststoff-Formteil nachfolgend entnommen wird. Dabei wird diejenige Wärmemenge ermittelt, die innerhalb eines vorgebbaren Zeitintervalls, von dem Kunststoff-Formteil an das Temperiermedium abgegeben worden ist. Dieser Vorgang wird über mehrere aufeinanderfolgende Zeitintervalle während des Abkühlens des Formteils wiederholt und die so ermittelten Wärmemengen werden aufsummiert, wobei der auf diese Weise erhaltene Summenwert einer weiteren Verwendung zugeführt wird. Der Summenwert kann beispielsweise dokumentiert werden oder bei Erreichen eines vorgebbaren Wertes der aufsummierten von dem Kunststoff-Material in der Form bzw. von dem Formteil an das Temperiermedium abgegebenen Gesamtwärmemenge kann der Entformungsvorgang gestartet werden. Dabei sind Durchflusssensoren und Temperatursensoren in den Temperierkanälen angeordnet und es können Schalt- und / oder Regelventile vorgesehen werden, mit denen der Durchfluss und / oder die Temperatur in den Temperierkanälen bzw. Temperierbereichen eingestellt oder geregelt werden können. Eine Regelung einer Gesamtfördermenge des Temperiermediums ist nicht offenbart.

Aus der EP 3 309 402 A1 ist ein Verfahren zum Auffinden einer Soll-Förderleistung eines zumindest eine Pumpe aufweisenden Pumpensystems für das Fördern eines Temperiermediums durch zumindest einen Temperierkanal eines Formwerkzeugs mittels der zumindest einen Pumpe und ein Pumpensystem zum Fördern eines Temperiermediums durch zumindest einen Temperierkanal eines Formwerkzeugs bekannt. Im Verfahren wird eine Regelung zumindest eines Temperiervolumenstroms durch den zumindest einen Temperierkanal nach einer Regelgröße unter Verwendung zumindest einer Drossel als Stellglied so durchgeführt, dass der zumindest eine Temperiervolumenstrom im Wesentlichen konstant bleibt, ein Förderstrom des Pumpensystems gemessen wird, die zumindest eine Pumpe ausgehend von einer Startförderleistung unabhängig von der Regelung des zumindest einen Temperiervolumenstroms so angesteuert wird, dass eine Förderleistung des Pumpensystems auf eine verringerte Förderleistung verringert wird, und danach überprüft wird, ob der Förderstrom im Wesentlichen konstant bleibt und, falls dies der Fall ist, die verringerte Förderleistung als Soll-Förderleistung bestimmt wird oder, falls dies trotz der Regelung des zumindest einen Temperiervolumenstroms nicht der Fall ist, die Startförderleistung als Soll-Förderleistung bestimmt wird. Dem liegt die Erkenntnis zugrunde, dass das Pumpensystem unabhängig von einer Regelung des Temperiervolumenstroms so angesteuert werden kann, dass ein optimierter Wert für eine Soll-Förderleistung des Pumpensystems aufgefunden werden kann. Dadurch kann die Ansteuerung des Pumpensystems komplett von einem Regelkreis für den zumindest einen Temperiervolumenstrom entkoppelt werden, was offensichtlich für eine Vereinfachung der Steuerung oder Regelung des Pumpensystems sorgt.

Die DE 10 2013 016 773 A1 offenbart ein Verfahren zur Überwachung einer Vorrichtung zur Temperiermedienversorgung eines Werkzeugs einer Spritzgießmaschine und eine entsprechende Vorrichtung. Dabei weist die Vorrichtung zur Temperiermedienversorgung einen Vorlauf und einen Rücklauf auf, zwischen denen wenigstens eine Temperierleitung angeordnet ist. In jeder der wenigstens einen Temperierleitung ist wenigstens ein Durchflusssensor angeordnet. Dabei wird wenigstens ein Druckabfall in der wenigstens einen Temperierleitung gemessen und aufgrund eines mit dem wenigstens einen Durchflusssensor gemessenen Volumenstroms und aufgrund des gemessenen Druckabfalls wird wenigstens ein hydraulischer Widerstand und / oder wenigstens eine Widerstandsänderung der wenigstens einen Temperierleitung berechnet und der hydraulische Widerstand und / oder die Widerstandsänderung visuell dargestellt. In der Vorrichtung bzw. dem Verfahren regelt eine Steuereinrichtung eine Gesamtfördermenge des Temperiermediums in einem oder mehreren Temperiermedienkanälen mittels nur einem Ventil. Dem liegt die Erkenntnis zugrunde, dass das Pumpensystem unabhängig von einer Regelung des Temperiervolumenstroms so angesteuert werden kann, dass ein optimierter Wert für eine Soll-Förderleistung des Pumpensystems aufgefunden werden kann. Dadurch kann die Ansteuerung des Pumpensystems komplett von einem Regelkreis für den zumindest einen Temperiervolumenstrom entkoppelt werden, was offensichtlich für eine Vereinfachung der Steuerung oder Regelung des Pumpensystems sorgt.

Die DE 10 2015 008 371 A1 offenbart eine Temperiervorrichtung zur Temperierung eines Formwerkzeugs und ein entsprechendes Verfahren mit zumindest einem Signaleingang, mittels welchem zumindest ein Parametersignal einem Prozessor zuführbar ist, in verschiedenen Ausführungsformen. Der Prozessor ist dazu ausgebildet, aus zumindest einem Temperierparameter, welcher das zumindest eine Parametersignal oder eine daraus abgeleitete Größe ist, eine für das Erreichen eines im Wesentlichen thermisch stationären Zustands des Formwerkzeugs charakteristische Größe zu berechnen und an eine Ausgabevorrichtung weiterzugeben, welche zur Ausgabe der charakteristischen Größe an einen Bediener und/oder an eine Maschinensteuerung geeignet ist. In der Vorrichtung bzw. dem Verfahren wirkt der Prozessor unabhängig von der Maschinensteuerung in Bezug auf eine Regelung einer Fördermenge eines Temperiermediums in einem Temperierkanal.

In der EP 2 762 290 A1 ist eine Temperiervorrichtung für ein Formwerkzeug oder Komponenten einer formgebenden Arbeitsmaschine und ein Verfahren zum Betreiben einer solchen Vorrichtung mit wenigstens einem Temperierzweig offenbart, welcher mit einem Vorlauf und einem Rücklauf verbunden ist, und einem wenigstens eine Pumpe umfassendes Pumpensystem zur Förderung von Temperiermedium im Vorlauf. Dabei sind in jedem Zweig Sensoren für die Durchflussmenge und die Temperatur vorhanden sowie ein regelbares Durchflussmengenventil. Eine Steuer- oder Regeleinrichtung steuert bzw. regelt die Temperatur des Temperiermediums mittels des Durchflussmengenventils aufgrund der Sensorsignale und mittels einer regelbaren Förderleistung des Pumpensystems.

Die US 2017/153074 A1 weist einen zur EP 2 762 290 A1 ähnlichen Offenbarungsgehalt auf.

Ausgehend von diesem Stand der Technik liegt der vorliegenden Erfindung die Aufgabe zugrunde, eine Vorrichtung und ein Verfahren zur geregelten Durchflusstemperierung zur Verfügung zu stellen, das energieeffizient soweit als möglich an den konkreten Temperierungsbedarf angepasst ist.

Diese Aufgabe wird durch eine Vorrichtung mit den Merkmalen des Anspruches 1 sowie durch ein Verfahren mit den Merkmalen des Anspruches 5 gelöst. Vorteilhafte Weiterbildungen sind Gegenstand der abhängigen Patentansprüche. Die in den Patentansprüchen einzeln aufgeführten Merkmale sind in technologisch sinnvoller Weise miteinander kombinierbar und können durch erläuternde Sachverhalte aus der Beschreibung und durch Details aus den Figuren ergänzt werden, wobei weitere Ausführungsvarianten der Erfindung aufgezeigt werden.

Wenn im Rahmen dieser Anmeldung von "Temperieren" die Rede ist, so wird hierunter ein Kühlen als auch ein Heizen verstanden.

Die Vorrichtung weist zur Durchflusstemperierung einer Spritzgießform neben einer Maschinensteuerung wenigstens eine Versorgungspumpe zum Zuführen von Temperiermedium zur Spritzgießform, einen Vorlauf, über den ausgehend von der Versorgungspumpe Temperiermedium zur Spritzgießform gelangt, einen Rücklauf, über den Temperiermedium von der Spritzgießform zumindest mittelbar zur Versorgungspumpe abgeführt wird, und mehrere Temperierkanäle auf, die durch die Spritzgießform geführt sind. Das Temperiermedium kann ausgehend von der Spritzgießform über den Rücklauf auch zunächst zu einem Auffangbehälter wie einem Tank gelangen und von dort aus von der Versorgungspumpe wieder dem Temperierkreislauf zugeführt werden. Die Temperierkanäle stehen mit dem Vorlauf und dem Rücklauf in Fluidverbindung. In den Temperierkanälen ist jeweils wenigstens ein Durchflussmengenventil zur Steuerung und/oder Regelung der Durchflussmenge vorgesehen. Temperatur und Durchflussmenge werden zudem über Temperatursensoren und Durchflussmengensensoren in den jeweiligen Temperierkanälen erfasst. Weitere Sensoren wie zum Beispiel Durchflussmengen- und Temperatursensoren an anderen Stellen im Kreislauf können ebenso vorgesehen sein wie z.B. auch Drucksensoren im Vorlauf und/oder Rücklauf.

Die Durchflussmengenventile, die Temperatursensoren und die Durchflussmengensensoren sind jeweils mit einer Regeleinrichtung und/oder einer gemeinsamen Regeleinrichtung verbunden, die zur Regelung und Überwachung der Temperatur der Temperierkanäle eingerichtet ist. Sie stehen zudem auch mit der Maschinensteuerung in Wirkverbindung. Die Regelung der vorzugsweise verschiedenen Temperaturen in den Temperierkanälen erfolgt über die Steuerung der Durchflussmenge an Temperiermedium mittels der jeweiligen Durchflussmengenventile.

Die Temperierkanäle zweigen von einem gemeinsamen Vorlauf ab, in dem ein Vorlauftemperatursensor vorgesehen ist. Sie enden in einem gemeinsamen Rücklauf. Die Regeleinrichtung regelt zum einen die Durchflussmenge, zum anderen ist sie aber auch mit der Maschinensteuerung zur Nachführung der Fördermenge der regelbaren Versorgungspumpe in Wirkverbindung und zwar zur Nachführung an den Bedarf der von den Durchflussmengenventilen geregelten Durchflussmenge. Außerdem ist die Maschinensteuerung eingerichtet, mittels komplexer Regelalgorithmen, insbesondere neuronaler Netze, einen energetisch optimalen Regelarbeitsbereich in einem vieldimensionalen Mehrgrößen-Regelsystem zur Nachführung der Fördermenge der regelbaren Versorgungspumpe auszuwählen. Dadurch kann die Spritzgießmaschine mit der Vorrichtung zur geregelten Durchflusstemperierung der Spritzgießform energetisch optimal betrieben werden, da nur so viel Fördermenge dem Temperierkreislauf zugeführt wird, wie tatsächlich erforderlich ist. Eine Schwingungsneigung des Regelsystems kann damit ebenfalls wirksam unterdrückt werden. Dies führt in mehrfacher Hinsicht zu einer Verringerung des Energiebedarfs, da zum einen die Fließverluste reduziert werden, zum anderen aber auch nur so viel an Fördermenge gefördert werden muss, wie im Moment gerade benötigt wird. Der jeweilige Bedarf wird in den einzelnen Temperierkanälen durch die den einzelnen Temperierkanälen zugeordneten Durchflussmengenventile bestimmt.

Vorzugsweise ist der Regeleinrichtung zur Regelung der durch die Durchflussmengenventile geregelten Durchflussmenge an Temperiermedium eine weitere Regeleinrichtung überlagert, die zur Regelung der Fördermenge der regelbaren Versorgungspumpe bestimmt ist. Diese Überlagerung hat den Vorteil, dass die Maschinensteuerung wie ein Beobachter zweiter Ordnung erst dann in das System eingreift, wenn sich aufgrund der durch die Sensoren erfassten Daten ergibt, dass eine weitere Nachführung der Versorgungspumpe an den konkreten Bedarf erforderlich ist. Dadurch kann die Energieeffizienz weiter gesteigert werden.

Die Nachführung der Versorgungspumpe wird mittels komplexen Regelalgorithmen (z.B. mittels neuronalen Netzen) ausgeführt, da es sich beim Vorhandensein von vielen (typischerweise z.B. 4 bis 16) Temperierkanälen um ein vieldimensionales Mehrgrößen-Regelsystem handelt. Wird durch den Beobachter auf der Maschinensteuerung festgestellt, dass die Mengensteuerung der Versorgungspumpe nicht mehr ausreicht, um die Regelbedürfnisse der einzelnen Temperierkanäle zu befriedigen (z. B. wenn die Mengensteuerung der Pumpe ständig bei 100 % läuft und die einzelnen Temperierkanäle ihre Solltemperatur ständig überschreiten), kann der übergeordnete Beobachter auf der Maschinensteuerung auch in die Steuerung der Vorlauftemperatur der Temperierversorgung eingreifen. Der Regelarbeitsbereich des übergeordneten Beobachtungsreglers wird immer so gewählt, dass die Temperieranordnung möglichst an einem energetischen Optimum arbeitet.

In einem bevorzugten Ausführungsbeispiel sind die Durchflussmengenventile in den Temperierkanälen stromabwärts vom Durchfluss durch die Spritzgießform angeordnet, sodass vorteilhaft der Wärmestrom erst nach der Spritzgießform durch die Durchflussmengenventile nachhaltig beeinflusst wird. Wärmeverluste infolge von Strömungsverlusten am Ventil treten damit nach der Spritzgießform auf, sodass sich die Temperatur genauer an die jeweiligen Anforderungen der Temperierkanäle anpassbar ist.

Bevorzugterweise sind die Elemente der Regeleinrichtung, das heißt die Regeleinrichtung selbst, die Durchflussmengenventile, die Temperatursensoren und die Durchflussmengensensoren über eine analoge und/oder digitale Echtzeitverbindung miteinander verbunden, sodass eine sehr genaue Nachführung der Temperatur an den von Temperierkanal zu Temperierkanal unterschiedlichen jeweiligen Temperaturbedarf an die jeweiligen Anforderungen angepasst vorteilhaft möglich ist.

Erfindungsgemäß wird die Aufgabe auch durch ein Verfahren gelöst, bei dem die Regelung der Temperatur über in jedem Temperierkanal vorgesehene Durchflussmengenventile erfolgt, über die der Durchfluss an Temperiermedium geregelt wird. Die Temperaturdifferenz zwischen Vorlauf und Rücklauf des jeweiligen Temperierkanals sowie die Durchflussmenge im jeweiligen Temperierkanal werden erfasst, welche gemeinsam als Führungsgröße für die Regelung der Temperatur eingesetzt werden. Vorzugsweise werden die Daten dazu in einen Wärmestrom verrechnet, um eine exakte Nachführung zu ermöglichen. Die Fördermenge einer regelbaren Versorgungspumpe wird der für die Temperaturregelung an den Durchflussmengenventilen erforderlichen Durchflussmenge nachgeführt. Dabei wird mittels komplexer Regelalgorithmen, insbesondere neuronaler Netze, ein energetisch optimaler Regelarbeitsbereich in einem vieldimensionalen Mehrgrößen-Regelsystem zur Nachführung der Fördermenge der regelbaren Versorgungspumpe ausgewählt. Dadurch ist einerseits eine gute Anpassung an den jeweiligen Temperierleistungsbedarf je Temperierkanal möglich, gleichzeitig kann die Versorgungspumpe durch den Beobachter auf der übergeordneten Maschinensteuerung durch Vorgabe der Stellgrößendrehzahl und/oder des Vorlaufdrucks und/oder der Vorlauftemperatur in einen energieeffizienten Betriebspunkt gebracht werden, in dem der jeweils gerade erforderliche Bedarf an Fördermenge für aller Temperierkanäle zur Verfügung gestellt wird.

Vorzugsweise ist bei einer Volumenstromregelung oder Wärmemengenregelung der erforderliche Bedarf infolge der Erfassung durch die Temperatursensoren und die Durchflussmengensensoren der Maschinensteuerung berechenbar bekannt. Damit ist auch der Ist-Volumenstrom durch die Temperierkanäle bekannt und kann zu einem Gesamtbedarf aufsummiert werden. An diesen Gesamtbedarf wird die Fördermenge der Versorgungspumpe angepasst. Dadurch wird durch eine überlagerte Regelung ein energieeffizienter Betrieb der Temperiereinrichtung für eine Spritzgießform geschaffen.

Weitere Vorteile ergeben sich aus den Unteransprüchen und der nachfolgenden Beschreibung eines bevorzugten Ausführungsbeispiels.

Im Folgenden wird die Erfindung anhand eines in den Figuren dargestellten Ausführungsbeispiels näher beschrieben. Es zeigen:
- Fig. 1: eine dreidimensionale Ansicht einer unverkleideten Formschließeinheit einer Spritzgießmaschine,
- Fig. 2: einen schematischen Leitungsplan einer Temperiereinrichtung,
- Fig. 3: den datentechnischen Schaltplan im Hinblick auf einen der Temperierkanäle der Temperiereinrichtung gemäß Fig. 2.

Bevor die Erfindung im Detail beschrieben wird, ist darauf hinzuweisen, dass sie nicht auf die jeweiligen Bauteile der Vorrichtung sowie die jeweiligen Verfahrensschritte beschränkt ist, da diese Bauteile und Verfahren variieren können. Die hier verwendeten Begriffe sind lediglich dafür bestimmt, besondere Ausführungsformen zu beschreiben und werden nicht einschränkend verwendet. Wenn zudem in der Beschreibung oder in den Ansprüchen die Einzahl oder unbestimmte Artikel verwendet werden, bezieht sich dies auch auf die Mehrzahl dieser Elemente, solange nicht der Gesamtzusammenhang eindeutig etwas Anderes deutlich macht.

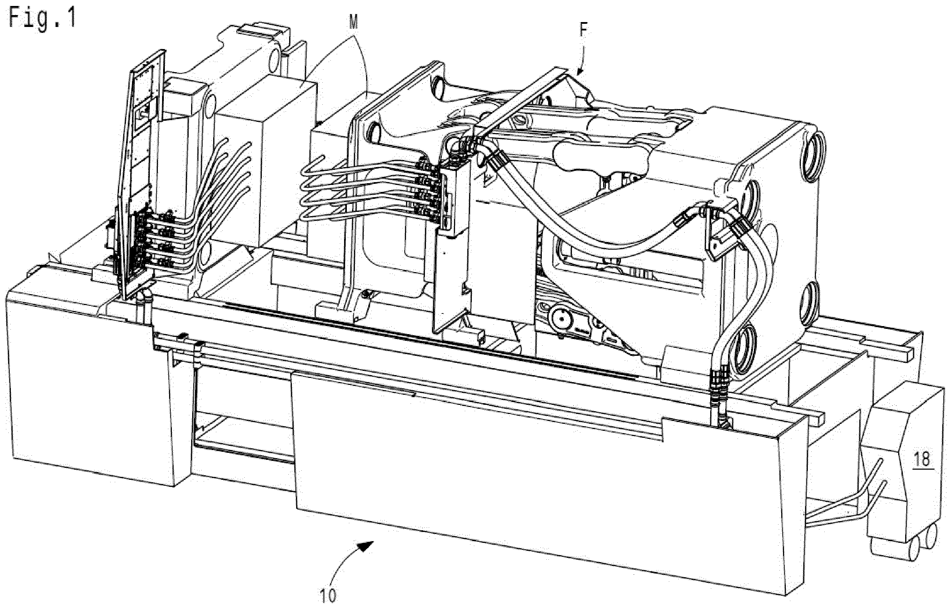

Figur 1 zeigt von einer Spritzgießmaschine 10 die Formschließeinheit F. Auf der rechten Seite ist dabei der Antrieb der Formschließeinheit zu erkennen. Auf der linken Seite sind zwei Formhälften einer Spritzgießform M zwischen Formträgern der Formschließeinheit F angeordnet. Zeichnerisch nicht dargestellt ist die sich links an die Formschließeinheit F anschließende Spritzgießeinheit.

Im üblichen Betrieb einer Spritzgießmaschine wird in der Spritzgießeinheit eine plastifizierbare Masse plastifiziert und homogenisiert, damit sie anschließend von der Spritzgießeinheit in einen Formhohlraum der Spritzgießform M eingespritzt werden kann. Während die plastifizierbare Masse beim Einspritzen infolge des Plastifizierens flüssig oder zumindest pastös ist, kühlt sie im Anschluss in der Spritzgießform M aus. Nach dem Auskühlen wird das so hergestellte Spritzgießteil aus der Spritzgießform M ausgeworfen. Für diesen Prozess, der zyklisch auf der Spritzgießmaschine 10 abläuft, ist eine Temperierung, das heißt ein Erwärmen und anschließendes Abkühlen der Spritzgießform M erforderlich, was über eine Temperiereinrichtung 18 erfolgt. Über die Temperiereinrichtung 18 wird Temperiermedium über die in Fig. 1 erkennbaren Leitungen den Formhälften der Spritzgießform M zugeleitet. Mit einer Spritzgießmaschine können unterschiedlichste Materialien verarbeitet werden. In der Regel ist eine derartige Kunststoffspritzgießmaschine 10 zur Verarbeitung von Kunststoffen und anderer plastifizierbarer Massen bestimmt und geeignet, wie zum Beispiel auch von metallischen, keramischen und/oder pulverförmigen Massen.

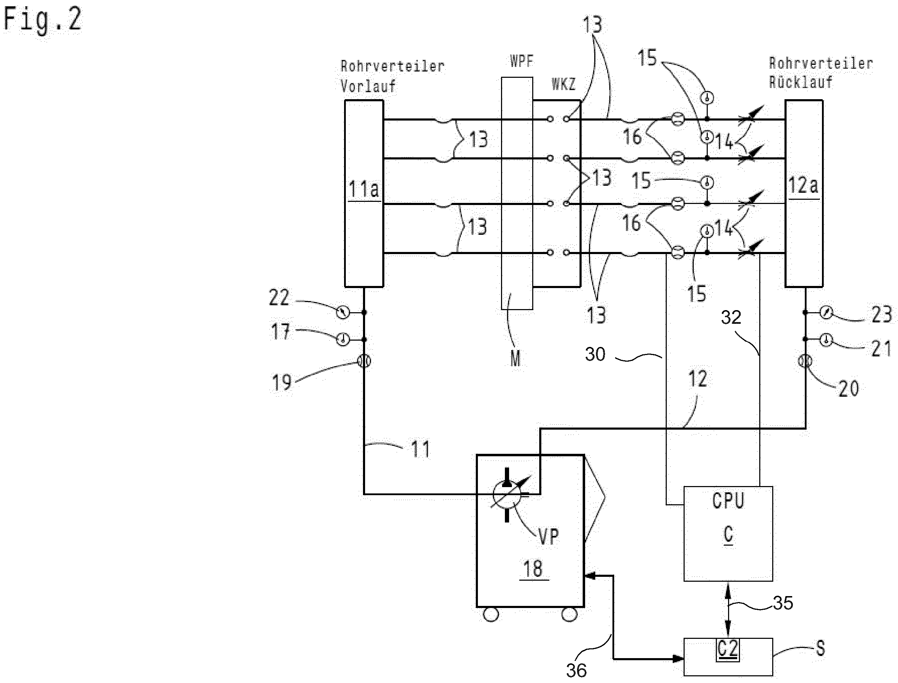

Im Folgenden wird auf Fig. 2 Bezug genommen, die eine Vorrichtung zur geregelten Durchflusstemperierung einer Spritzgießform M mittels einer Temperiereinrichtung 18 zeigt. Die Vorrichtung umfasst eine Maschinensteuerung S. Über wenigstens eine Versorgungspumpe VP, die im Ausführungsbeispiel in der Temperiereinrichtung 18 angeordnet ist, wird Temperiermedium der Spritzgießform M zugeführt. Die Vorrichtung weist wenigstens einen Vorlauf 11 auf, über den ausgehend von der Versorgungspumpe VP Temperiermedium zur Spritzgießform M gelangt. Im Ausführungsbeispiel umfasst der Vorlauf 11 neben einer Leitung einen Rohrverteiler 11a.

In Fig. 2 auf der rechten Seite befindet sich ebenfalls ein Rohrverteiler 12a, der jedoch dem Rücklauf 12 zugeordnet ist, über den Temperiermedium von der Spritzgießform M zumindest mittelbar zur Versorgungspumpe VP abgeführt wird. Das Temperiermedium kann wie in Fig. 2 dargestellt nämlich entweder unmittelbar der Temperiereinrichtung 18 zugeführt werden, es ist jedoch ebenso möglich, das Temperiermedium einem Temperiermittelbehälter zuzuführen, von dem aus die Versorgungspumpe VP das Temperiermedium wieder über den Vorlauf 11 in den Temperierkreislauf fördert.

Im oberen Teil der Fig. 2 sind mehrere Temperierkanäle 13 vorgesehen, die durch die Spritzgießform M geführt sind und mit dem Vorlauf 11 sowie dem Rücklauf 12 bzw. den entsprechenden Rohrverteilern 11a bzw. 12a in Fluidverbindung stehen. In den Temperierkanälen 13 sind mehrere regelbare Durchflussmengenventile 14 zur Steuerung/Regelung der Durchflussmenge an Temperiermedium in den jeweiligen Temperierkanälen 13 vorgesehen. Zudem sind mehrere Temperatursensoren 15 zur Erfassung einer Temperatur in den jeweiligen Temperierkanälen 13 nach Durchströmen der und damit stromabwärts von der Spritzgießform M vorgesehen. In den jeweiligen Temperierkanälen 13 befinden sich ferner mehrere Durchflussmesser 16 zur Erfassung einer Durchflussmenge in den jeweiligen Temperierkanälen 13.

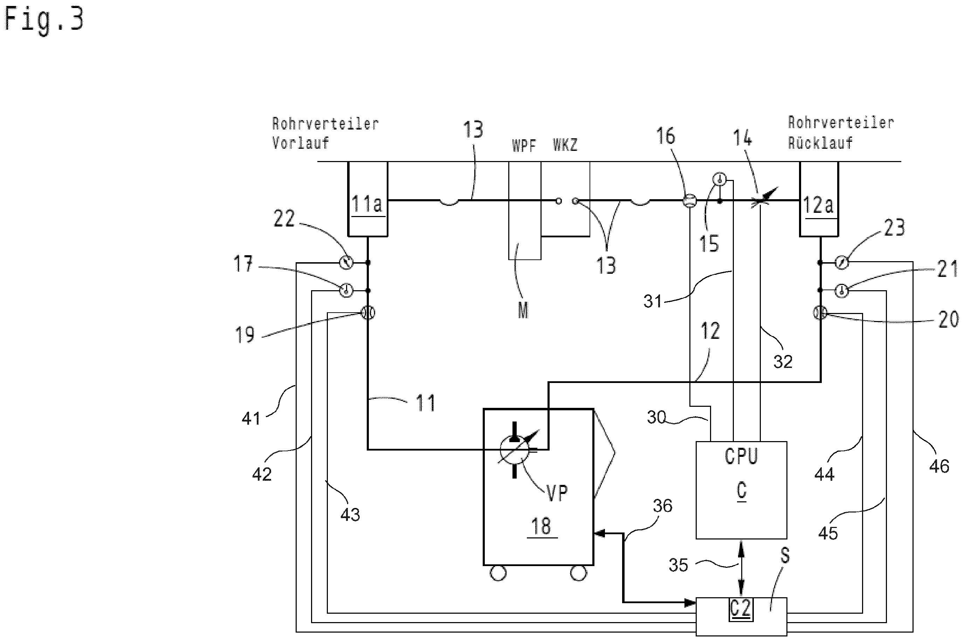

Die Vorrichtung umfasst eine Regeleinrichtung C, die in Fig. 2 schematisch angedeutet mit den regelbaren Durchflussmengenventilen 14, den Temperatursensoren 15 und den Durchflussmessern 16 regelungstechnisch verbunden ist und zur Regelung und Überwachung der Temperatur, Temperaturdifferenz zum Vorlauf, Durchflussmenge und/oder abgeführten Wärmeleistung in den Temperierkanälen 13 eingerichtet ist. Sie steht mit der Maschinensteuerung S in Wirkverbindung. Dies ist schematisch für einen Temperierkanal 13 beispielhaft in Fig. 3 dargestellt. Die Regelung dieser Größen (z.B. der Temperatur) erfolgt mittels der Durchflussmengenventile 14 über eine Steuerung der Durchflussmenge an Temperiermedium in den Temperierkanälen 13, wobei z.B. die Solltemperatur von Temperierkanal 13 zu Temperierkanal 13 durchaus verschieden sein kann.

Die Durchflussmengenventile 14, die Temperatursensoren 15 und die Durchflussmesser 16 sind damit vorzugsweise jeweils mit einer und/oder einer gemeinsamen Regeleinrichtung verbunden, die zur Regelung und Überwachung der Temperatur der Temperierkanäle 13 eingerichtet ist.

Fig. 2 zeigt, dass die Temperierkanäle 13 von einem gemeinsamen Vorlauf 11 abzweigen und in einem gemeinsamen Rücklauf 12 enden. Im Vorlauf 11 ist ein Vorlauftemperatursensor 17 vorgesehen. Bedarfsweise können dort auch ein Durchflussmesser 19 für den Vorlauf und/oder ein Drucksensor 22 vorgesehen sein. Die Regeleinrichtung C steht mit Maschinensteuerung S zur Nachführung der Fördermenge der regelbaren Versorgungspumpe VP an den Bedarf der von den Durchflussmengenventilen 14 geregelten Durchflussmengen an Temperiermedium in den Temperierkanälen 13 in Wirkverbindung.

Ein derartiger Aufbau ermöglicht zum einen, dass von Temperierkanal 13 zu Temperierkanal 13 unterschiedliche Temperaturen "gefahren" werden können, da durch die jeweiligen Durchflussmengenventile 14 die dem jeweiligen Temperierkanal 13 zugeführte Durchflussmenge und damit auch der abgeführte Wärmestrom (abgeführte Leistung) geregelt werden kann.

Benutzt wird dazu die Temperaturdifferenz zwischen Vorlauf, gemessen am Vorlauftemperatursensor 17, und den Temperatursensoren 15 im Rücklauf. Da aber gleichzeitig neben der Temperatur auch die tatsächlich vorliegende Durchlaufmenge an den Durchflussmessern 16 erfasst wird, können diese Informationen an die Maschinensteuerung S oder vorzugsweise an eine in der Maschinensteuerung S vorgesehene weitere Regeleinrichtung C2 weitergegeben werden, die in Abhängigkeit des damit bekannten Bedarfs der Temperiereinrichtung mit der Temperiereinrichtung 18 in Verbindung steht, um die Fördermenge der Versorgungspumpe VP an den jeweiligen Bedarf der Temperierkreisläufe anzupassen bzw. ihn nachzuführen. Die weitere Regeleinrichtung C2 bildet damit eine Art Energieverbrauchsregler. Damit ist nicht nur eine individuelle Temperierung innerhalb der Spritzgießform M möglich, es kann ergänzend eine energieeffiziente Anpassung der Fördermenge mittels der regelbaren Versorgungspumpe VP gewährleistet werden. Dadurch kann der Energiebedarf der Spritzgießmaschine 10 von Zyklus zu Zyklus an den konkreten Bedarf angepasst und damit verringert werden.

Vorzugsweise ist der Regeleinrichtung C zur Regelung der durch die Durchflussmengenventile 14 geregelten Durchflussmenge die weitere Regeleinrichtung C2 zur Regelung der Fördermenge der regelbaren Versorgungspumpe VP überlagert. Damit ist die Maschinensteuerung S bzw. die weitere Regeleinrichtung C2 ein Beobachter zweiter Ordnung, der die Fördermenge zeit- und bedarfsgerecht als eine Art Energieverbrauchsregler nachführen kann. Dadurch ist einerseits eine gute Anpassung an den jeweiligen Temperierleistungsbedarf je Temperierkanal 13 möglich, gleichzeitig kann die Versorgungspumpe VP durch den Beobachter auf der übergeordneten Maschinensteuerung bzw. der weiteren Regeleinrichtung C2 durch Vorgabe der Stellgrößendrehzahl und/oder des Vorlaufdrucks und/oder der Vorlauftemperatur in einen energieeffizienten Betriebspunkt gebracht werden, in dem der jeweils gerade erforderliche Bedarf an Fördermenge für aller Temperierkanäle 13 zur Verfügung gestellt wird.

Die Nachführung der Versorgungspumpe VP wird mittels komplexen Regelalgorithmen (z.B. mittels neuronalen Netzen) ausgeführt, da es sich beim Vorhandensein von vielen (typischerweise z.B. 4 bis 16) Temperierkanälen 13 in einer Spritzgießform M um ein vieldimensionales Mehrgrößen-Regelsystem handelt. Wird durch den Beobachter auf der Maschinensteuerung bzw. der weiteren Regeleinrichtung C2 festgestellt, dass die Mengensteuerung der Versorgungspumpe VP nicht mehr ausreicht, um die Regelbedürfnisse der einzelnen Temperierkanäle 13 zu befriedigen (z.B. wenn die Mengensteuerung der Versorgungspumpe VP ständig bei 100 % und damit unter Volllast läuft und die einzelnen Temperierkanäle 13 ihre Solltemperatur ständig überschreiten), kann der übergeordnete Beobachter auf der Maschinensteuerung bzw. der weiteren Regeleinrichtung C2 auch in die Steuerung der Vorlauftemperatur der Temperierversorgung der untergeordneten einzelnen Temperierkanäle eingreifen. Der Regelarbeitsbereich des übergeordneten Beobachters auf der Maschinensteuerung bzw. der weiteren Regeleinrichtung C2 wird immer so gewählt, dass die Temperieranordnung möglichst an einem energetischen Optimum arbeitet. Das bedeutet z.B., dass die Temperieranordnung bezüglich Druck mal Volumenstrom im Vorlauf unter der Randbedingung arbeitet, dass die einzelnen Temperierkanäle 13 einen vorgegebenen minimalen Durchfluss im Rücklauf 12 nicht unterschreiten und ihre geforderte Regelaufgabe bestmöglich erfüllen.

Vom Grundprinzip her sind viele Temperierkanäle 13 vorgesehen, die entweder mit je einem einzelnen Regler oder wie in Fig. 2 gezeigt einer gemeinsamen Regeleinrichtung C autark versuchen, ihre vorgegebene Regelaufgabe in Bezug auf entweder Volumenstrom, Temperatur am Rücklauf (mit minimal einzuhaltendem Volumenstrom), Temperaturdifferenz Vorlauf zu Rücklauf, abgeführte Wärmeleistung (delta T * Volumenstrom) mittels des Stellglieds Durchflussmengenventil 14 zu regeln. Die einzelnen Temperierkanäle 13 sind von den gegebenen Randbedingungen bezüglich Vorlaufversorgung und Restdruck im Rücklauf durch die (im Prinzip autarke) zentrale Temperiereinrichtung 18 eingeschränkt in ihrem Regelverhalten.

Die zentrale Temperiereinrichtung 18 hat nun im Sinne der Anmeldung neben den üblichen Größen wie Vorlauftemperatur und Vorlaufdruck zusätzlich noch eine über die Steuerung zugängliche Stellgröße für die Pumpendrehzahl der Versorgungspumpe VP. Das Zusammenspiel zwischen Pumpendrehzahl, resultierendem Vorlaufdruck in Wirkzusammenhang mit dem aktuellen Summenverbrauch über die einzelnen (Verbraucher-)Temperierkanäle 13 ermöglicht dem Beobachter zweiter Ordnung auf der Maschinensteuerung bzw. der weiteren Regeleinrichtung C2 einen Energie optimalen Betriebspunkt für das gesamte System zu berechnen/regeln, wobei vorzugsweise die Hauptstellgröße die Pumpendrehzahl der Versorgungspumpe VP ist.

Da es bei einem solch komplexen System keinen absolut Energie-optimalen Betriebspunkt gibt, sind die eingesetzten Regelalgorithmen bisher meist sehr komplex oder decken eben nur bestimmte enge Betriebsgrenzen ab. ("If then else" Beobachter, neuronale Netze, ...). Derartige Systeme neigen zum Schwingen, insbesondere wenn ein Mehrgrößenregler gegen einen zentralen Regler arbeitet. Durch die hier vorgeschlagene Lösung ist jedoch ein energieeffizienter Betrieb möglich.

Die Ausgestaltung mit Regeleinrichtung C und übergeordnetem Beobachter in Form der weiteren Regeleinrichtung C2 hat darüberhinaus auch den Vorteil, dass als Temperiereinrichtung 18 ein beliebiges Gerät vom Hersteller und der Steuerung unabhängig integriert werden kann.

In einem bevorzugten Ausführungsbeispiel sind die Durchflussmengenventile 14 in den Temperierkanälen 13 stromabwärts vom Durchfluss durch die Spritzgießform M angeordnet, um dadurch den Einfluss der Durchflussmengenventile 14 auf den Energiehaushalt zu eliminieren. Wird an dieser Stelle, die vorzugsweise auch stromabwärts von den Temperatursensoren 15 und den Durchflussmesser 16 liegt, beim Durchströmen durch die Durchflussmengenventile 14 ein Wärmeverlust erzeugt, geht dieser nicht in die Regelschleife ein. Sind wie in Fig. 2 schematisch aufgezeigt, die Temperatursensoren 15 stromabwärts an den Temperierkanälen 13 außerhalb der Spritzgießform M angebracht, muss z.B. bei einer Temperaturregelung ein minimaler Durchfluss am Temperierkanal 13 aufrecht erhalten werden, um die Wirkverbindung zum eigentlichen Temperierkanal 13 im Werkzeug nicht zu unterbrechen.

Grundsätzlich können wie im Vorlauf 11 auch im Rücklauf 12 ein weiterer Durchflussmesser 20 sowie ein Temperatursensor 21 für den Rücklauf sowie ein Drucksensor 23 vorgesehen sein. Weitere Sensoren wie zum Beispiel Durchflussmesser und Temperatursensoren an anderen Stellen im Kreislauf können ebenso vorgesehen sein. Die Informationen dieser Sensoren können ebenso der Regeleinrichtung C oder der weiteren Regeleinrichtung C2 bzw. der Maschinensteuerung S zur weiteren Verwendung zugeführt werden. Mit diesen weiteren Sensoren wird eine Verbesserung der Stabilität der weiteren Regeleinrichtung C2 als Energieverbrauchsregler unter Beibehaltung der Regelgüte für die einzelnen Temperierkanäle ermöglicht.

Vorzugsweise sind sämtliche Steuerleitungen zwischen den Teilen der Sensorik und der Regeleinrichtung bzw. auch der zugehörigen Aktoren wie der regelbaren Durchflussmengenventile 14 als analoge und/oder digitale Echtzeitverbindung ausgebildet und zum Beispiel über Ethernet miteinander verbunden. Dadurch ist eine zeitgenaue bedarfsgerechte Nachführung jederzeit möglich.

Ein Beispiel für die datentechnischen Wirkverbindung zwischen den Teilen der gesamten Temperieranordnung zeigt Fig. 3 schematisch für einen vom Rohrverteiler 11a abzweigenden und im Rohrverteiler 12a mündenden Temperierkanal 13 mit Durchflussmengenventil 14, Durchflussmesser 16 und Temperatursensor 15. All diese Elemente sind über die Daten- und/oder Steuerleitungen 30, 31, 32 mit der Regeleinrichtung C verbunden. Die Regeleinrichtung C steht über die Datenleitung 35 mit der weiteren Regeleinrichtung C2 und diese über die Datenleitung 36 mit der Temperiereinheit 18 in Wirkverbindung. Ebenso steht die weitere Regeleinrichtung C2 über die weiteren Daten- und Steuerleitungen 41, 42, 43, 44, 45, 46 mit den weiteren Sensoren im Vorlauf 11 und Rücklauf 12 in Wirkverbindung.

Verfahrensgemäß wird die Durchflusstemperierung der Spritzgießform M mit der beschriebenen Vorrichtung so betrieben, dass zunächst in bekannter Weise die Regelung der Temperatur über in jedem Temperierkanal 13 vorgesehene Durchflussmengenventile 14 erfolgt, über die der Durchfluss an Temperiermedium geregelt wird. Die Vorrichtung macht sich dabei die Temperaturdifferenz zwischen Vorlauf 11, erfasst durch den Vorlauftemperatursensor 17, und dem Rücklauf 12 des jeweiligen Temperierkanals 13, erfasst durch die Temperatursensoren 15 im Rücklauf 12, in Verbindung mit der durch die Durchflussmesser 16 erfassten Durchflussmenge zunutze. Aus diesen Informationen kann die Regeleinrichtung C den Wärmestrom berechnen, der als Führungsgröße für die Regelung der Temperatur eingesetzt werden kann. Da zudem die Fördermenge durch die Durchflussmesser 16 bekannt ist, kann auch die Fördermenge der regelbaren Versorgungspumpe VP an den konkreten Bedarf angepasst werden, der sich aufgrund der durch die Durchflussmengenventile 14 geregelte Durchflussmenge ergibt. Dadurch ist ein energieeffizienter Betrieb der Temperiereinrichtung möglich.

Bei einem für eine Volumenstromregelung oder Wärmemengenregelung erforderlichen Bedarf an Temperiermedium, der der Maschinensteuerung S infolge der Erfassung durch Temperatursensoren 15 und Durchflussmesser 16 berechenbar bekannt ist, können vorzugsweise die damit bekannten Ist-Volumenströme durch die Temperierkanäle 13 zu einem Gesamtbedarf aufsummiert werden. An diesen Gesamtbedarf lässt sich die Fördermenge der Versorgungspumpe VP energieeffizient anpassen.

### Bezugszeichenliste

- 10: Spritzgießmaschine
- 11: Vorlauf
- 11a: Rohrverteiler Vorlauf
- 12: Rücklauf
- 12a: Rohrverteiler Rücklauf
- 13: Temperierkanäle
- 14: Durchflussmengenventil
- 15: Temperatursensor
- 16: Durchflussmesser
- 17: Vorlauftemperatursensor
- 18: Temperiereinrichtung
- 19: Durchflussmesser Vorlauf
- 20: Durchflussmesser Rücklauf
- 21: Temperatursensor Rücklauf
- 22: Drucksensor Vorlauf
- 23: Drucksensor Rücklauf
- 30,31,32: Daten- und/oder Steuerleitungen
- 35,36: Daten- und/oder Steuerleitungen
- 41,42,43, 44,45,46: Daten- und/oder Steuerleitungen
- C: Regeleinrichtung
- C2: weitere Regeleinrichtung
- M: Spritzgießform
- F: Formschließeinheit
- S: Maschinensteuerung
- VP: Versorgungspumpe

## Patentansprüche

1. Spritzgießmaschine (10) zur Verarbeitung von Kunststoffen und anderer plastifizierbarer Massen, wie metallischen, keramischen und/oder pulverförmigen Massen, mit einer Vorrichtung zur geregelten Durchflusstemperierung einer Spritzgießform (M) mit
- einer Maschinensteuerung (S),
- wenigstens einer Versorgungspumpe (VP) zum Zuführen von Temperiermedium zur Spritzgießform (M),
- einem Vorlauf (11), über den ausgehend von der Versorgungspumpe (VP) Temperiermedium zur Spritzgießform (M) gelangt,
- einem Rücklauf (12) über den Temperiermedium von der Spritzgießform (M) zumindest mittelbar zur Versorgungspumpe (VP) abgeführt wird,
- mehreren Temperierkanälen (13), die durch die Spritzgießform (M) geführt sind und mit dem Vorlauf (11) und dem Rücklauf (12) in Fluidverbindung stehen,
- mehreren regelbaren Durchflussmengenventilen (14) zur Regelung der Durchflussmenge des Temperiermediums in den jeweiligen Temperierkanälen (13),
- mehreren Temperatursensoren (15) zur Erfassung einer Temperatur des Temperiermediums in den jeweiligen Temperierkanälen (13),
- mehrere Durchflussmesser (16) zur Erfassung einer Durchflussmenge an Temperiermedium in den jeweiligen Temperierkanälen (13),
- wobei die regelbaren Durchflussmengenventile (14), Temperatursensoren (15) und die Durchflussmesser (16) mit einer Regeleinrichtung (C) verbunden sind, die zur Regelung und Überwachung der Temperatur des Temperiermediums in den Temperierkanälen (13) eingerichtet ist und mit der Maschinensteuerung (S) in Wirkverbindung steht, wobei die Regelung der Temperatur über eine Steuerung der Durchflussmenge an Temperiermedium in den Temperierkanälen (13) erfolgt,
- wobei die Temperierkanäle (13) von dem ihnen gemeinsamen Vorlauf (11) abzweigen, in dem ein Vorlauftemperatursensor (17) vorgesehen ist, und
- wobei die Temperierkanäle (13) in dem ihnen gemeinsamen Rücklauf (12) enden und
**dadurch gekennzeichnet, dass** die Regeleinrichtung (C) mit der Maschinensteuerung (S) zur Nachführung der Fördermenge der regelbaren Versorgungspumpe (VP) an den Bedarf der von den Durchflussmengenventilen (14) geregelten Durchflussmenge in Wirkverbindung steht und
dass die Maschinensteuerung (S) eingerichtet ist, mittels komplexer Regelalgorithmen, insbesondere neuronaler Netze, einen energetisch optimalen Regelarbeitsbereich in einem vieldimensionalen Mehrgrößen-Regelsystem zur Nachführung der Fördermenge der regelbaren Versorgungspumpe (VP) auszuwählen.

2. Vorrichtung nach Anspruch 1, **dadurch gekennzeichnet, dass** der Regeleinrichtung (C) zur Regelung der durch die Durchflussmengenventile (14) geregelten Durchflussmenge eine weitere Regeleinrichtung (C2) zur Regelung der Fördermenge der regelbaren Versorgungspumpe (VP) überlagert ist.

3. Vorrichtung nach Anspruch 1 oder 2, **dadurch gekennzeichnet, dass** die Durchflussmengenventile (14) in den Temperierkanälen stromabwärts vom Durchfluss durch die Spritzgießform (M) angeordnet sind.

4. Vorrichtung nach einem der vorhergehenden Ansprüche **dadurch gekennzeichnet, dass** die Regeleinrichtung (C), die Durchflussmengenventile (14), die Temperatursensoren (15) und die Durchflussmesser (16) über eine Echtzeitverbindung miteinander und/oder mit der Maschinensteuerung (S) in Wirkverbindung stehen.

5. Verfahren zur geregelten Durchflusstemperierung einer Spritzgießform (M) mit einer Vorrichtung einer Spritzgießmaschine (10) nach einem der Ansprüche 1 bis 4, wobei die Regelung der Temperatur über in jedem Temperierkanal (13) vorgesehen Durchflussmengenventile (14) erfolgt, über die der Durchfluss an Temperiermedium durch den jeweiligen Temperierkanal (13) geregelt wird, wobei
die Temperaturdifferenz zwischen Vorlauf (11) und Rücklauf (12) des jeweiligen Temperierkanals (13) sowie die Durchflussmenge im jeweiligen Temperierkanal (13) erfasst werden, welche gemeinsam als Führungsgröße für die Regelung der Temperatur eingesetzt werden,
**dadurch gekennzeichnet, dass** die Fördermenge einer regelbaren Versorgungspumpe (VP) der für die Temperaturregelung erforderlichen Durchflussmenge durch die Durchflussmengenventile (14) nachgeführt wird,
wobei mittels komplexer Regelalgorithmen, insbesondere neuronaler Netze, ein energetisch optimaler Regelarbeitsbereich in einem vieldimensionalen Mehrgrößen-Regelsystem zur Nachführung der Fördermenge der regelbaren Versorgungspumpe (VP) ausgewählt wird.

6. Verfahren nach Anspruch 5, **dadurch gekennzeichnet, dass** bei einem für eine Volumenstromregelung oder Wärmemengenregelung erforderlichen Bedarf, der der Maschinensteuerung (S) infolge der Erfassung durch die Temperatursensoren (15) und die Durchflussmesser (16) berechenbar bekannt ist, die damit bekannten Ist-Volumenströme durch die Temperierkanäle (13) zu einem Gesamtbedarf aufsummiert werden, an den die Fördermenge der Versorgungspumpe (VP) angepasst wird.

## Claims

1. An injection moulding machine (10) for processing plastics and other plasticisable materials, such as metal, ceramic and/or powder materials, comprising a device for controlled throughput temperature control of an injection mould (M), comprising
- a machine controller (S),
- at least one supply pump (VP) for supplying tempering medium to the injection mould (M),
- a feed line (11) through which tempering medium from the supply pump (VP) reaches the injection mould (M),
- a return line (12) through which tempering medium is guided away from the injection mould (M) to the supply pump (VP) at least indirectly,
- a plurality of tempering channels (13) leading through the injection mould (M) and in fluidic connection with the feed line (11) and the return line (12),
- a plurality of throughput quantity valves (14) for controlling the throughput quantity of the tempering medium in the respective tempering channels (13),
- a plurality of temperature sensors (15) for detecting a temperature of the tempering medium in the respective tempering channels (13),
- a plurality of throughput meters (16) for detecting a throughput quantity of tempering medium in the respective tempering channels (13),
- wherein the controllable throughput quantity valves (14), the temperature sensors (15) and the throughput meters (16) are connected to a control device (C) that is configured for controlling and monitoring of the temperature of the tempering medium in the tempering channels (13) and is in operative connection with the machine controller (S), wherein the control of the temperature is by way of control of the throughput quantity of tempering medium in the tempering channels (13),
- wherein the tempering channels (13) branch off from the feed line (11) that is common to them, in which a feed line temperature sensor (17) is provided, and
- wherein the tempering channels (13) end in the return line (12) that is common to them, and **characterised in that** the control device (C) is in operative connection with the machine controller (S) for the purpose of adjusting the quantity conveyed by the controllable supply pump (VP) to the demand for throughput quantity controlled by the throughput quantity valves (14), and
**in that** the machine controller (S) is configured to use complex control algorithms, in particular neural networks, to select an energy-optimised control operating range in a multidimensional multi-variable control system for adjusting the quantity conveyed by the controllable supply pump (VP).

2. A device according to Claim 1, **characterised in that** superposed on the control device (C) for control of the throughput quantity that is controlled by the throughput quantity valves (14) is a further control device (C2), for control of the quantity conveyed by the controllable supply pump (VP).

3. A device according to Claim 1 or 2, **characterised in that** the throughput quantity valves (14) are arranged in the tempering channels downstream of the flow through the injection mould (M).

4. A device according to one of the preceding claims, **characterised in that** the control device (C), the throughput quantity valves (14), the temperature sensors (15) and the throughput meters (16) are in operative connection with one another and/or with the machine controller (S) by way of a real-time connection.

5. A method for controlled throughput temperature control of an injection mould (M) comprising a device of an injection moulding machine (10) according to one of Claims 1 to 4, wherein control of the temperature is performed by way of throughput quantity valves (14) which are provided in each tempering channel (13) and by which the throughput of tempering medium through the respective tempering channel (13) is controlled, wherein
the temperature difference between feed line (11) and return line (12) of the respective tempering channel (13), and the throughput quantity in the respective tempering channel (13), are detected and together used as a command variable for controlling the temperature,
**characterised in that** the quantity conveyed by a controllable supply pump (VP) is adjusted to the throughput quantity required for temperature control by the throughput quantity valves (14), wherein complex control algorithms, in particular neural networks, are used to select an energy-optimised control operating range in a multidimensional multi-variable control system for the purpose of adjusting the quantity conveyed by the controllable supply pump (VP).

6. A method according to Claim 5, **characterised in that** in the case of a demand required for volumetric flow rate control or heat quantity control that is known to the machine controller (S) from calculation as a result of detection by the temperature sensors (15) and the throughput meters (16), the consequently known actual volumetric flow rates through the tempering channels (13) are added together to give a total demand to which the quantity conveyed by the supply pump (VP) is adapted.

## Revendications

1. Machine de moulage par injection (10) pour la transformation de matières plastiques et d'autres masses plastifiables, comme des masses métalliques, céramiques et/ou pulvérulentes, avec un dispositif pour le réglage de la température de l'écoulement d'un moule de moulage par injection (M) comportant
- une unité de commande de la machine (S),
- au moins une pompe d'alimentation (VP) pour l'apport d'un milieu de réglage de la température au moule de moulage par injection (M),
- un départ (11) par l'intermédiaire duquel le milieu de réglage de la température provenant de la pompe d'alimentation (VP) arrive au moule de moulage par injection (M),
- un retour (12) par l'intermédiaire duquel le milieu de réglage de la température est transféré du moule de moulage par injection (M) au moins indirectement à la pompe d'alimentation (VP),
- plusieurs canaux de réglage de la température (13), qui sont prévus à travers le moule de moulage par injection (M) et qui sont en liaison fluidique avec le départ (11) et le retour (12),
- plusieurs vannes de débit réglables (14) pour le réglage du débit du médium de réglage de la température dans les canaux de réglage de la température (13) respectifs,
- plusieurs capteurs de température (15) pour mesurer la température du milieu de réglage de la température dans les canaux de réglage de la température (13) respectifs,
- plusieurs débitmètres (16) pour la mesure du débit du milieu de réglage de la température dans les canaux de réglage de la température respectifs (13),
- les vannes de débit réglables (14), les capteurs de température (15) et les débitmètres (16) étant reliés à un circuit de réglage (C) qui est configuré pour régler et surveiller la température du milieu de réglage de la température dans les canaux de réglage de la température (13) et qui est en liaison active avec l'unité de commande de la machine (S), le réglage de la température se produisant grâce à la commande du débit de milieu de réglage de la température dans les canaux de réglage de la température (13),
- les canaux de réglage de la température (13) dérivant du départ (11) qui leur est commun et dans lequel un capteur de température de départ (17) est prévu, et
- les canaux de réglage de la température (13) aboutissant dans le retour (12) qui leur est commun et
cette machine étant **caractérisée en ce que** le circuit de réglage (C) est en liaison active avec l'unité de commande de la machine (S) pour le suivi du débit de la pompe d'alimentation (VP) réglable selon le besoin en débit réglé par les vannes de débit réglable (14) et
**en ce que** l'unité de commande de la machine (S) est configurée pour sélectionner au moyen d'algorithmes complexes, en particulier de réseaux neuronaux, un domaine de travail de réglage énergétiquement optimal dans un système de réglage à plusieurs grandeurs multidimensionnelles pour le suivi du débit de la pompe d'alimentation (VP) réglable.

2. Dispositif selon la revendication 1, **caractérisé en ce que** sur le circuit de réglage (C) est superposé, pour le réglage du débit réglé par les vannes de réglage de débit (14), un autre circuit de réglage (C2) pour le réglage du débit à la pompe d'alimentation réglable (VP).

3. Dispositif selon la revendication 1 ou 2, **caractérisé en ce que** les vannes de débit (14) sont disposées dans les canaux de réglage de la température en aval de l'écoulement à travers le moule de moulage par injection (M).

4. Dispositif selon l'une ou plusieurs des revendications précédentes, **caractérisé en ce que** le circuit de réglage (C), les vannes de débit (14), les capteurs de température (15) et les débitmètres (16) sont en liaison active par l'intermédiaire d'une liaison en temps réel les uns avec les autres et/ou avec l'unité de commande de la machine (5).

5. Procédé de réglage de la température d'un écoulement d'un moule de moulage par injection (M) avec un dispositif d'une machine de moulage par injection (10) selon l'une des revendications 1 à 4, dans lequel le réglage de la température s'effectue au moyen de vannes de réglage de débit (14) prévues dans chaque canal de réglage de la température (13), grâce auxquelles est réglé l'écoulement d'un milieu de réglage de la température à travers le canal de réglage de la température (13) respectif, la différence de température entre le départ (11) et le retour (12) du canal de réglage de la température (13) respectif ainsi que le débit étant mesurés dans le canal de réglage de la température (13) respectif et utilisés ensemble comme valeurs de référence pour le réglage de la température,
ce procédé étant **caractérisé en ce que** le débit d'une pompe d'alimentation (VP) nécessaire pour le réglage de la température est suivi à travers les vannes de débit (14),
un domaine de travail de réglage énergétiquement optimal étant sélectionné au moyen d'algorithmes complexes, en particulier de réseaux neuronaux, dans un système de réglage à plusieurs grandeurs multidimensionnelles pour le suivi du débit de la pompe d'alimentation (VP).

6. Procédé selon la revendication 5, **caractérisé en ce qu'**en cas de demande nécessaire pour une réglage de débit volumétrique ou d'un réglage de quantité de chaleur, demande qui est connue par calcul par l'unité de commande de la machine (S) suite à la mesure par les capteurs de température (15) et les débitmètres (16), les débits volumétriques réels ainsi connus s'ajoutent à travers les canaux de réglage de la température (13) en un besoin global auquel le débit de la pompe d'alimentation (VP) s'adapte.
